# EUROPEAN PATENT APPLICATION

(11) **EP 1 923 231 A1**
(43) Date of publication of application: **21.05.2008**
(21) Application number: 07022174.2
(22) Date of filing: 15.11.2007
(51) Int. Cl.: B60B 27/02, B60B 1/04

(54) **Bicycle wheel, spoke and hub for such a wheel and method for assembling the wheel**

(30) Priority: 20.11.2006 IT MI20062215
(71) Applicant: CAMPAGNOLO S.r.l., 36100 Vicenza (VI) (IT)
(72) Inventor: Urbani, Davide, 36075 Montecchio Maggiore (Vicenza) (IT); Busa, Andrea, 36030 Zugliano (Vicenza) (IT)
(74) Representative: Castiglia, Paolo

(57) **Abstract**

Bicycle wheel, comprising a hub (3), a rim and a plurality of spokes (5) extending between the hub and the rim. Each spoke (5) comprises a first end portion (10) coupled with the hub and a second end portion coupled with the rim. The first end portion (10) comprises an abutment surface (31) in contact with a first stop surface (53) of the hub in a tensioning condition of the spoke. A surface (32) substantially opposite the aforementioned abutment surface, on the other hand, does not make contact with, the hub. The wheel further comprises locking means (48) of the spoke with respect to the hub adapted to prevent or to limit a displacement of the abutment surface away from the first stop surface in a detensioning condition of the spoke, like for example that which occurs for a violent impact against uneven or rough ground.

## Description

The present invention relates to a bicycle wheel.

The invention also relates to a spoke and a hub for a bicycle wheel.

Finally, the invention also relates to a method for assembling a bicycle wheel.

As known, the spokes for a bicycle wheel consist of substantially threadlike elements, generally made from metal like steel or aluminium or alloys thereof, provided with a first end portion for attachment to the central element of the wheel consisting of the hub and a second end portion for attachment to the rim on which the tyre is mounted.

Typically, the end portion for attachment to the hub comprises a widened head adapted to be stably housed in seats formed in the hub. The end portion for attachment to the rim, on the other hand, comprises a threaded area to allow, through the help of a suitable nut or nipple, attachment to the rim and adjustment of the tension in the spoke.

In the assembly step of the wheel, each spoke is slid inside a respective seat of the hub until a stop configuration is reached in which the head abuts against a stop surface of the hub. The threaded end of the spoke is at this point screwed into the nut or nipple until a predetermined tension value is reached in the spoke.

Straight-headed spokes and curved-headed spokes are known. In straight-headed spokes the end portion for attachment to the hub extends coaxially to the longitudinal axis of the elongated body of the spoke, whereas in curved-headed spokes the end portion for attachment to the hub is curved, i.e. it extends along a direction inclined by a predetermined angle with respect to the longitudinal axis of the elongated body of the spoke.

With particular reference to wheels with straight-headed spokes, the Applicant has found that, in the case of a violent impact against uneven or rough ground, the rim deforms elastically and the spokes lose their tension, displacing with respect to the hub and to the rim in the opposite direction to that of tensioning of the spoke. Therefore, it is possible that, following these displacements, the spokes might get stuck in the seats of the hub in an undesired position or even, in the case of seats open at the front end surface of the hub, that the spokes might come out from such seats. In both cases, there is a dangerous situation and a loss of functionality of the wheel. In particular, in the case in which the spoke get stuck into the seat in an undesired position, the spoke has a useful length that is shorter than the distance between rim and hub; this means that, when the deformed rim goes back into the original configuration, the spoke is subjected to a traction tension that, if greater than the yield point of the spoke, causes it to break.

The situation described above occurs very frequently in mountain bikes, but it is not excluded that this could occur in racing bicycles too. The situation described above can also occur in all types of spoke-hub coupling known to the Applicant, with the sole exception of that which provides for curved-headed spokes inserted in circular holes formed in the hub. In this case, indeed, the displacement of the spokes in the opposite direction to the traction direction (just like the displacement of the spokes in the traction direction) is in any case prevented by the abutment against the walls of the holes.

The technical problem at the basis of the present invention is to provide a wheel that can withstand violent impacts during travel without risking the spoke breaking or coming out from the seat of the hub.

The invention therefore relates, in a first aspect thereof, to a bicycle wheel comprising a hub adapted to rotate about a rotation axis, a rim and a plurality of spokes extending between the hub and the rim, at least one of said spokes comprising an elongated body extending along a longitudinal axis and having a first end portion coupled with the hub and a second end portion coupled with the rim, wherein the first end portion of the spoke comprises an abutment surface in contact with a first stop surface of the hub in a tensioning condition of the spoke and a surface substantially opposite said abutment surface and not making contact with the hub, the wheel being characterised in that it comprises locking means of the spoke with respect to the hub adapted to limit a displacement of said abutment surface away from said first stop surface in a detensioning condition of the spoke.

In the present application a limited displacement should be intended as a predetermined displacement that is not sufficient to disengage the spoke from the hub. In this way it is ensured that the spoke will continue to work even after a shock so that the wheel does not loose its efficiency. Even if the spoke gets stuck, this does not mean that it brakes down immediately, therefore the cyclist has time to check the wheel after the shock before riding further.

Preferably the first end portion is housed in a respective seat formed in the hub and the locking means limit the displacement so that the end portion does not come out of the seat.

Preferably, said locking means prevent a displacement of said abutment surface away from said first stop surface in a detensioning condition of the spoke.

Advantageously, even when the spoke loses its tension because of the elastic deformation of the rim due to a violent impact with, for example, uneven or rough ground, the spoke remains immobile with respect to the hub. The movement of the spoke with respect to the hub in the opposite direction to the tensioning direction is indeed prevented by the presence of the aforementioned locking means, which keep the abutment surface of the spoke in contact with the stop surface of the hub. The risk that the spoke gets stuck into the seat in an undesired position or, in the case of open seats at the front end surface of the hub, comes out from the seat is thus avoided. There is also no risk of earth or little stones, by going between the head of the spoke and the seat at times of detensioning, creating a thickness that could result in overtensioning of the spoke.

Preferably, the aforementioned abutment surface is active, in a tensioning condition of the spoke with the wheel assembled, on the first stop surface to prevent the displacement of the spoke towards the rim.

In a first embodiment of the wheel of the present invention, at least some of the spokes extend from the hub towards the rim in respective planes that contain the rotation axis of the hub. In particular, in a preferred embodiment of the wheel of the present invention, all of the spokes of the wheel extend radially from the hub. In this case the locking means prevent or limit a radial displacement of the spoke towards the centre of the hub, i.e. in the opposite direction to the traction direction of the spoke in the tensioning condition of the spoke. However, it is not excluded the case in which just some of the spokes of the wheel extend radially, like for example in the case of wheels in which the spokes are grouped together on the rim. In this case, the other spokes extend parallel to the radial spoke of the same group or they are inclined with respect to such a radial spoke.

In an alternative embodiment of the wheel of the present invention, at least some of the spokes extend from the hub towards the rim in respective planes that do not contain the rotation axis of the hub. In particular, an embodiment is foreseen in which all of the spokes of the wheel extend from the hub along a direction inclined by a predetermined angle with respect to the radial direction. In this case, the locking means prevent or limit a displacement of the spoke with respect to the hub along such an inclined direction. However, it is not excluded the case in which just some of the spokes of the wheel extend according to such an inclined direction.

In general, the man skilled in the art will recognise that the locking means of the present invention can be used in any type of wheel and with any arrangement of the spokes.

In a particularly preferred embodiment of the wheel of the present invention, the locking means are defined on the elongated body of the spoke and cooperate with a second stop surface of the hub. In this case, preferably, the locking means are made in a single piece with the elongated body of the spoke. In this way the manufacturing costs of the wheel are reduced.

More preferably, the locking means are defined, in the elongated body of the spoke, in a locking portion adjacent to the first end portion of the spoke and such a first end portion of spoke is housed in a respective seat formed in the hub.

In the assembled wheel, the aforementioned locking portion can be arranged outside of the aforementioned seat, in which case the aforementioned second stop surface is an outer surface of the hub, or it can be at least partially housed in the aforementioned seat, in which case the aforementioned second stop surface is an inner surface of such a seat.

Irrespective of the specific position of the locking portion with respect to the hub in the configuration with the wheel assembled, the aforementioned locking means are preferably defined by at least one cross section of the aforementioned locking portion having, along at least one predetermined transversal direction, an extension greater than that of at least one cross section of the first end portion of spoke. The variation in cross section of the spoke between locking portion and first end portion of the spoke can in practice be made by simply providing, in the locking portion of the elongated body of the spoke, a conical side surface, or a surface inclined with respect to the longitudinal axis of the spoke, or a step.

Preferably, the aforementioned at least one cross section of the aforementioned locking portion has, along a direction perpendicular to the aforementioned predetermined transversal direction, an extension shorter than that of the aforementioned at least one cross section of the first end portion of spoke.

In a different embodiment of the spoke that can be used in the wheel of the present invention, the aforementioned locking means are defined by an element that projects from a side of the elongated body of the spoke.

The seat of the hub and the spoke are preferably shaped so that by rotating the spoke with respect to the seat, in the assembly step of the wheel, about a rotation axis passing through a free end of the first end portion of the spoke, the locking means abut on the aforementioned second stop surface.

What described above is applicable both to a straight-headed spoke, i.e. a spoke in which the aforementioned first end portion extends entirely along the longitudinal axis of the spoke, and to a curved-headed spoke, i.e. a spoke in which the aforementioned first end portion extends along a direction inclined with respect to the longitudinal axis of the spoke. Both in the case of a straight-headed spoke or of a curved-headed spoke, the aforementioned rotation preferably occurs in a plane substantially perpendicular to a median plane of the wheel, however it is also contemplated the possibility of a rotation in a different plane, for example in a plane inclined or substantially parallel to such a median plane of the wheel.

From what has been stated above it can be seen how the locking means do not block the aforementioned rotation of the spoke with respect to the hub which is an essential movement in the assembly step of the wheel. Such a rotation occurs in a plane that intercepts the rim and terminates when the end of spoke for coupling with the rim is at the rim. Since in the configuration with the wheel assembled the end for coupling with the rim is locked on the rim, any rotation of the spoke with respect to the hub is technically impossible, therefore the spoke can not get disengaged from the hub.

In a preferred embodiment of the wheel of the present invention, the hub comprises an annular central portion and a plurality of spoke attachment portions projecting radially from the aforementioned central portion and each seat is formed on a respective spoke attachment portion of the hub.

Preferably, each seat comprises a first opening for the insertion of the first end portion of the spoke in the assembly step of the wheel and a second opening for the passage of the spoke from the hub to the rim in the configuration with the wheel assembled, said first and second openings being in communication with each other through a slit having at least one dimension smaller than that of the first opening.

More preferably, the first opening and the slit are formed on a front end surface of each spoke attachment portion and each seat for housing spokes comprises, in an axially inner position with respect to the slit and between the first opening and the second opening, a housing cavity of the first end portion of spoke having a first inner side surface portion adapted to act in abutment on the first end portion of spoke to prevent the displacement of the spoke along a direction parallel to the rotation axis of the hub and a second inner side surface portion adapted to act in abutment on the first end portion of the spoke to prevent the displacement of the spoke towards the rim.

In such a case a reasonable limited displacement is such as not to allow the end portion to step over the inner side surface portion of the seat.

Even more preferably, the aforementioned cavity comprises a first cavity portion adjacent to the first opening and a second cavity portion having a dimension smaller than that of the first cavity portion and defined on the opposite side to the first opening with respect to the first cavity portion. In this case, the aforementioned first inner side surface portion is defined in the first cavity portion and the aforementioned second inner side surface portion is defined at the interface between the first cavity portion and the second cavity portion.

The aforementioned cavity extends radially in the respective spoke attachment portion preferably along a direction inclined by a predetermined angle with respect to the rotation axis of the hub, such an angle being the camber angle of the wheel.

In an alternative embodiment of the wheel of the present invention, the locking means are not defined in the elongated body of the spoke but are associated with the body of the hub and cooperate with a free end surface of the first end portion of the spoke. Such an embodiment is particularly advantageous since it allows the technical advantages of the present invention to be achieved with the most common types of spokes on the market, without needing to modify such spokes. The spoke can, for example, be a common straight-headed cylindrical spoke.

Preferably, the locking means in this case comprise a Seeger ring housed in a throat formed on a front end surface of the hub and projecting from the throat so as to define an abutment surface for the free end surface of the first end portion of the spoke. Such a preferred embodiment of the wheel of the present invention can easily be obtained by making slight modifications to the most common types of hubs on the market.

In a second aspect thereof, the invention relates to a spoke for a bicycle wheel, comprising an elongated body extending along a longitudinal axis and having a first end portion for coupling with a bicycle hub and a second end portion for coupling with a bicycle rim, wherein the first end portion of the spoke comprises an abutment surface adapted to act in contact with a stop surface of the hub in a tensioning condition of the spoke with the wheel assembled, the spoke being characterised in that it comprises locking means of the spoke with respect to the hub adapted to limit a displacement of the aforementioned abutment surface away from the aforementioned stop surface in a detensioning condition of the spoke with the wheel assembled.

Advantageously, such a spoke can be used in the wheel of the present invention and therefore allows all of the aforementioned advantages with reference to the embodiment of the wheel of the present invention in which the locking means are defined on the spoke to be obtained.

Preferably, said locking means prevent a displacement of said abutment surface away from said stop surface in a detensioning condition of the spoke with the wheel assembled.

Preferably, the aforementioned spoke has, individually or in combination, all of the structural and functional features discussed above with reference to the spokes of the wheel of the present invention.

In particular, preferably, the aforementioned abutment surface is adapted to act, in a tensioning condition of the spoke with the wheel assembled, against the aforementioned stop surface of the hub to prevent the displacement of the spoke towards the rim of the wheel.

Preferably, the locking means are defined on a side surface of a locking portion of the elongated body of the spoke, such a locking portion being adjacent to the first end portion of the spoke.

In particular, the locking means are preferably defined by at least one cross section of the aforementioned locking portion having, along at least one predetermined transversal direction, an extension greater than that of at least one cross section of the first end portion of the spoke.

Even more preferably, the aforementioned at least one cross section of the aforementioned locking portion has an extension, along a direction perpendicular to the aforementioned predetermined transversal direction, shorter than that of the aforementioned at least one cross section of the first end portion of the spoke.

Alternatively, the locking means can be defined by an element projecting from a side of the elongated body of the spoke.

As already stated above, the spoke can be a straight-headed spoke, in which case the aforementioned first end portion extends along the longitudinal axis of the spoke, or a curved-headed spoke, in which case the aforementioned first end portion extends along a direction inclined with respect to the longitudinal axis of the spoke.

In a third aspect thereof, the invention relates to a hub for a bicycle wheel, comprising a body having at least one seat for housing a respective end portion of spoke comprising a first stop surface adapted to act in contact with an abutment surface of a respective end portion of spoke in a tensioning condition of the spoke with the wheel assembled, wherein, on the opposite side to the first stop surface, the hub body is not intended to come into contact with the end portion of spoke, the hub being characterised in that it comprises locking means of the spoke with respect to the hub adapted to limit a displacement of the aforementioned abutment surface away from the aforementioned stop surface in a detensioning condition of the spoke with the wheel assembled.

Advantageously, such a hub can be used in the wheel of the present invention and therefore allows all of the aforementioned advantages with reference to the embodiment of the wheel of the present invention in which the locking means are associated with the hub to be obtained.

Preferably said locking means prevent a displacement of said abutment surface away from said stop surface in a detensioning condition of the spoke with the wheel assembled.

Preferably, the aforementioned hub has, individually or in combination, all of the structural and functional features discussed above with reference to the hub of the wheel of the present invention.

In particular, preferably, the aforementioned first stop surface is adapted to act, in a tensioning condition of the spoke with the wheel assembled, against the abutment surface of the spoke to prevent the displacement of the spoke in the direction of the rim of the wheel.

Preferably, the locking means are positioned in the hub body in a radially outer position with respect to the aforementioned first stop surface.

In a first embodiment of the hub, the locking means are defined on an inner side surface of each seat.

In this case, preferably, said side surface defines, in at least one first cross section of said seat, an area having, along at least one predetermined transversal direction, an extension greater than that of an area defined by the same surface in a second cross section closer to said stop surface.

More preferably, the area defined by said side surface in said at least one first cross section of the seat has an extension, along a direction perpendicular to the aforementioned predetermined transversal direction, shorter than that of the aforementioned at least one adjacent second cross section of the seat.

In a preferred embodiment of the hub, the hub body is substantially tubular and comprises an annular central portion and, at at least one of the opposite end portions thereof, a plurality of spoke attachment portions projecting radially from the aforementioned central portion, wherein said at least one seat is formed on a spoke attachment portion.

In a specific embodiment of the wheel of the present invention, each seat is formed on a respective spoke attachment portion. Preferably, the wheel is in this case a front wheel for a bicycle with V-brakes.

In a different embodiment of the wheel of the present invention, at least one spoke attachment portion comprises at least two seats. Such seats are preferably formed on opposite sides of the spoke attachment portion. Preferably, the wheel is in this case a rear wheel for a bicycle with V-brakes, and in this case the spoke attachment portions with two seats are provided on the side of the hub in which the sprocket assembly is mounted, or a front or rear wheel for a bicycle with disc brakes, and in this case the spoke attachment portions with two seats are provided on both sides of the hub, with twice the number of spokes on the side of the hub in which the disc, in the case of the front wheel, or the sprocket assembly, in the case of the rear wheel, is mounted.

Preferably, each seat comprises a first opening for the insertion of the end portion of the spoke in the assembly step of the wheel and a second opening for the passage of the spoke from the hub to the rim in the configuration with the wheel assembled, said first and second openings being in communication with each other through a slit having at least one dimension smaller than that of the first opening.

More preferably, the first opening and the slit are formed on a front end surface of the spoke attachment portion and the slit communicates with a housing cavity of the first end portion of spoke formed in said spoke attachment portion between the first opening and the second opening, said housing cavity of the end portion of spoke having a first inner side surface portion active in abutment on the end portion of spoke to prevent the displacement of the spoke along a direction parallel to the rotation axis of the hub and a second inner side surface portion active in abutment on the end portion of the spoke to prevent the displacement of the spoke towards the rim.

Even more preferably, the aforementioned cavity comprises a first cavity portion adjacent to the first opening and a second cavity portion having a size smaller than that of the first cavity portion and defined on the opposite side to the first opening with respect to the first cavity portion. In this case, the aforementioned first inner side surface portion is defined in the first cavity portion and the second inner side surface portion is defined at the interface between the first cavity portion and the second cavity portion.

The aforementioned cavity extends radially in the respective spoke attachment portion preferably along a direction inclined by a predetermined angle with respect to the rotation axis of the hub, such an angle being the camber angle of the wheel.

In an alternative embodiment of the hub, the locking means are associated with the hub body and preferably comprise a Seeger ring housed in a throat formed on a front end surface of the substantially tubular hub body projecting from the throat so as to define an abutment surface for a free end surface of the end portion of the spoke.

In a fourth aspect thereof, the invention relates to a method for assembling a bicycle wheel, comprising the steps of:
- providing a plurality of spokes;
- associating a first free end portion of each spoke with a hub;
- associating a second free end portion of each spoke with a rim;
- tensioning the spoke to a predetermined tension value;
characterised in that the step of associating a first free end portion of each spoke with a hub comprises the steps of:
- inserting said first free end portion into a seat formed in the hub until it is brought into abutment against an inner surface of said seat;
- rotating the spoke about a rotation axis passing through said first free end portion in a plane intercepting the rim until the first end portion of spoke abuts against a stop surface of the hub.

The aforementioned method can be carried out for the assembly of the wheel of the present invention.

The aforementioned rotation preferably takes place in a plane substantially perpendicular to a median plane of the wheel, for example to mount straight-headed spokes in seats formed on the front end surface of the hub or curved-headed spokes in seats defined by through holes having an opening on the front end surface of the hub.

In a specific embodiment for the assembly of a wheel having, on a free end portion of the hub, a number of spokes which is twice that of the opposite free end portion of the hub, the step of associating a first free end portion of the spoke with the hub comprises the steps of:
- associating at least one spoke with the hub at a first side of a spoke attachment portion formed in the hub at a first free end portion thereof;
- associating at least one spoke with the hub at a second side of said spoke attachment portion opposite said first side;
- associating at least one spoke with the hub at a second free end portion of the hub opposite said first free end portion.

Advantageously, in this way it is possible to mount all of the spokes on the hub through the aforementioned rotation.

Further characteristics and advantages of the present invention shall become clearer from the following detailed description of some preferred embodiments thereof, made with reference to the attached drawings. In these drawings:
- figure 1 is a schematic front view of a wheel in accordance with a first embodiment of the present invention;
- figure 2 is a side view of the wheel of figure 1;
- figure 3 is an enlarged section of the wheel of figure 1 according to the plane III-III;
- figure 4 illustrates a step for mounting a spoke in the wheel of figure 1;
- figure 5 is a perspective view of the hub of the wheel of figure 1;
- figure 6 is an enlarged front view of a portion of the hub-spokes coupling area of the wheel of figure 1;
- figures 7 and 8 are respective front and side views of a spoke of the wheel of figure 1;
- figure 9 is an enlarged view of the end portion for attachment to the hub of a spoke of the wheel of figure 1;
- figures 10, 11 and 12 are cross sections of the spoke of figure 7 and 8 respectively according to the planes IX, X and XI;
- figures 13, 14 and 15 illustrate the assembly steps of the spoke of figure 7 and 8 in the hub of the wheel of figure 1;
- figure 16 is a section of a portion of the wheel of figure 1 according to the plane XV of figure 14;
- figures 17 to 23 illustrate alternative embodiments of spokes-hub couplings of wheels in accordance with the present invention;
- figure 24 is a perspective view of a different embodiment of the wheel of the present invention;
- figure 25 is an enlarged perspective view of the hub-spokes coupling area of the wheel of figure 24, from a first point of observation;
- figure 26 is an enlarged perspective view of the hub-spokes coupling area of the wheel of figure 24, from a second point of observation opposite to the first point of observation;
- figure 27 is an enlarged perspective view of a portion of the hub-spokes coupling area of a further different embodiment of the wheel of the present invention;
- figure 28 is a view similar to figure 15 but referred to an alternative embodiment of the present invention.

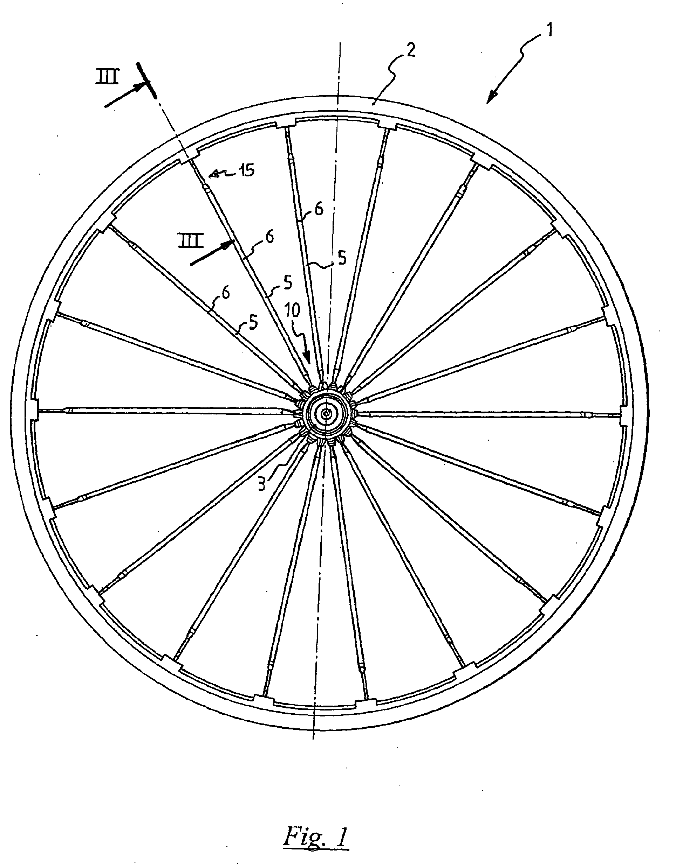

In figures 1, 2 and 4, a first embodiment of a wheel according to the present invention is indicated with 1. Such a wheel is in particular a front wheel for a bicycle with V-brakes. The term V-brakes is here intended as a general term indicating each kind of traditional brake different from a disk brake.

The wheel 1 comprises a rim 2, a hub 3 and a plurality of spokes 5, each of which has an end portion 10 for coupling with the hub 3 and an end portion 15 for coupling with the rim 2.

The spokes 5 extend from the hub 3 towards the rim 2 in respective planes that contain the rotation axis M of the hub 3 and, in particular, along radial directions with respect to the hub 3.

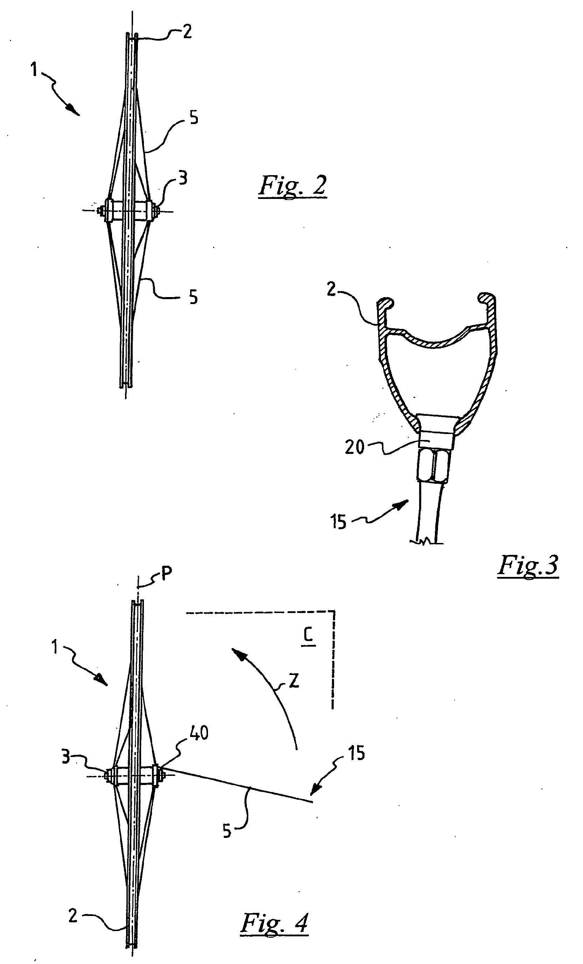

The coupling between spoke 5 and rim 2 is carried out according to methods known in the field, for example through a nipple 20 (figure 3) associated with the free end of the end portion 15 for coupling with the rim 2. The nipple 20 constitutes a stop head of the spoke 5 against the bottom of the rim 2 in the tensioning condition of the spoke, whereas it does not prevent a possible displacement of the spoke 5 with respect to the rim 2 in the opposite direction to the tensioning direction. Nevertheless, it is not excluded a way of coupling between spoke and rim in which the end portion of the spoke coupled with the rim is locked against sliding with respect to the rim in both directions, as for example occurs in cases in which the spoke is screwed directly into the rim.

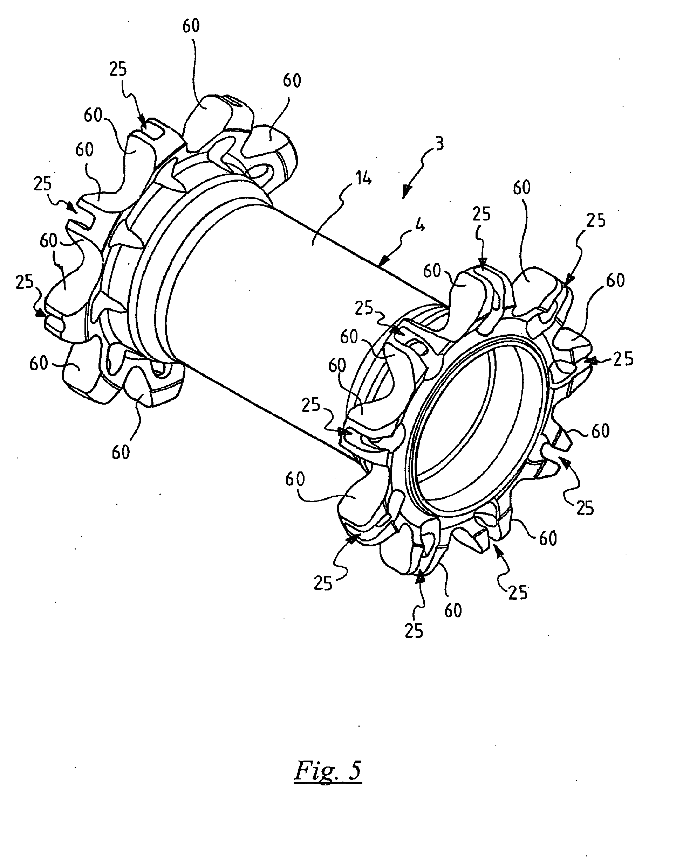

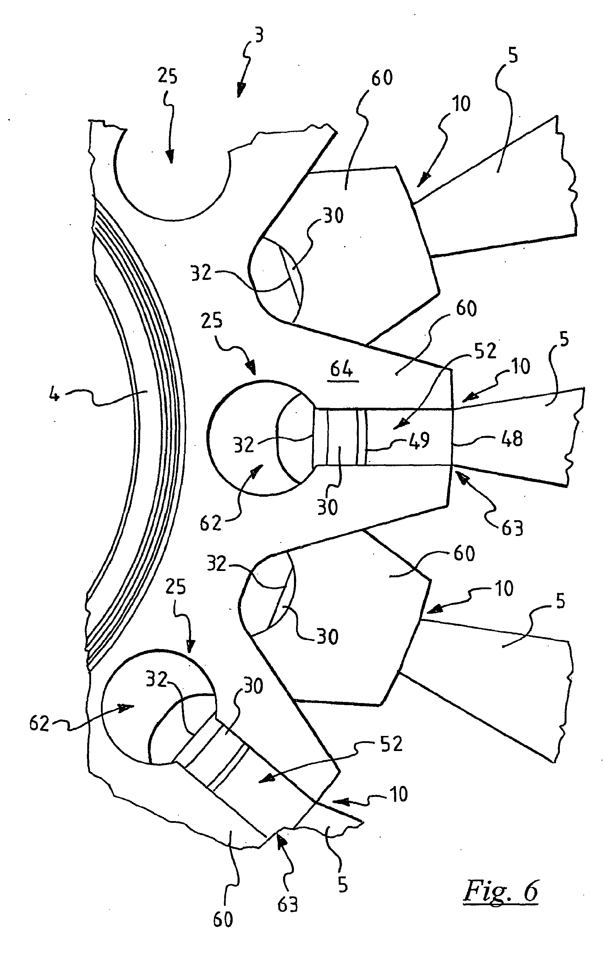

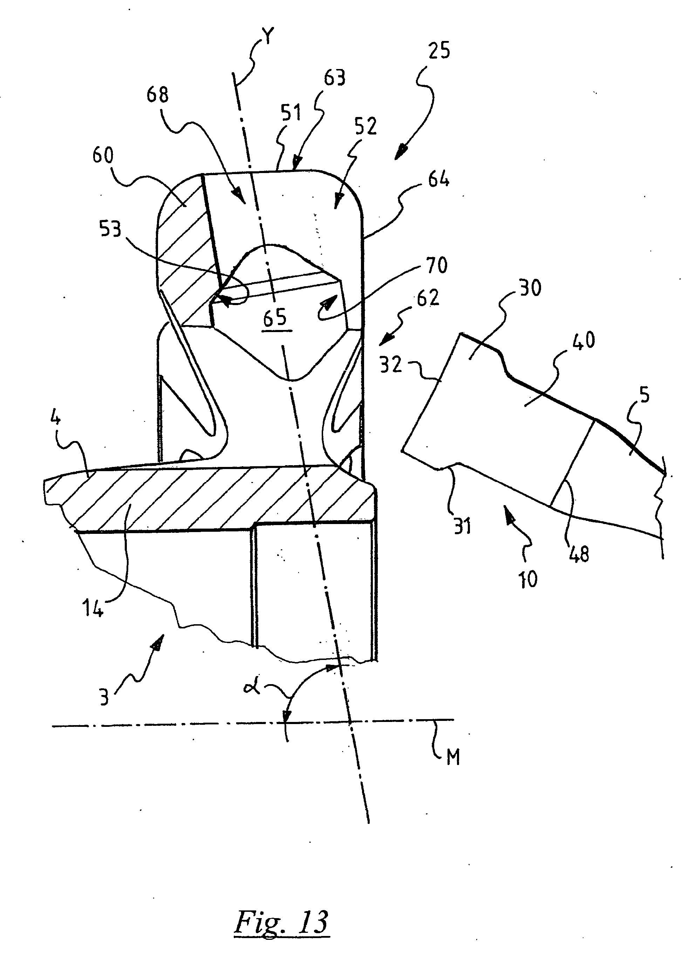

The coupling area between the hub 3 and the spokes 5 is illustrated in detail in figure 6 and in figures 13-16, whereas the hub 3 is illustrated in its entirety in figure 5. With reference to such figures, the hub 3 comprises a substantially tubular body 4 having an annular central portion 14 and, at the opposite free end portions thereof, a plurality of spoke attachment portions 60 that extend radially from the annular central portion 14. In each spoke attachment portion 60 a respective coupling seat 25 is formed in which the end portion 10 for coupling with the hub 10 of the spoke 5 is inserted.

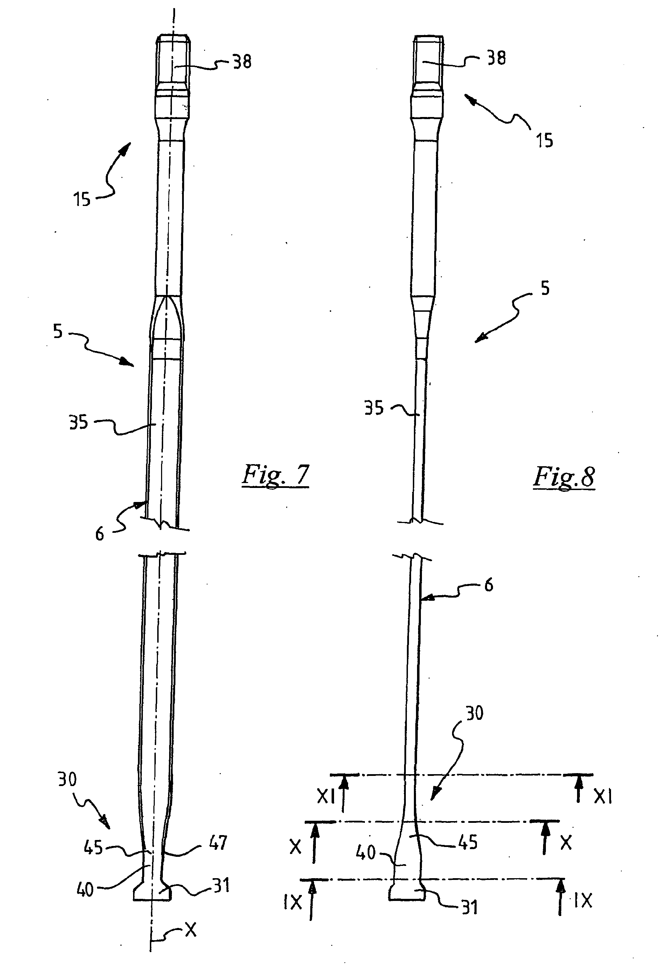

The spokes 5 of the wheel of figure 1 are illustrated in detail in figures 7 to 12. Each spoke 5 comprises an elongated body 6 extending along a longitudinal axis X and having a central area 35, preferably flattened, a threading 38 in the end portion 15 for coupling with the rim 2 for screwing into the nipple 20 and a head 30 in the portion 10 for coupling with the hub 3.

In particular, these are straight-headed spokes, i.e. spokes in which the head 30 extends coaxially to the elongated body 6 of the spoke along the longitudinal axis X.

The head 30 comprises an abutment surface 31 that, in the tensioning condition of the spoke, is in contact with an inner surface 53 (figures 13-16) of a respective coupling seat 25. The surface 53 has a shape matching that of the abutment surface 31 and constitutes a stop surface of the spoke, in the sense that it prevents any possible displacement of the spoke 5 with respect to the hub 3 in the direction of traction.

The head 30 also comprises a surface 32 opposite the abutment surface 31; such a surface does not make contact with any surface of the hub.

The head 30 is preferably conical and is joined to the central portion 35 through a neck 40. As can clearly be seen in figures 7, 9 and 10, between the neck 40 and the intermediate portion 35 a joining portion 45 is arranged comprising at least one section 46 perpendicular to the axis X that extends sideways in a different way from a section 41 of the neck 40. In particular, the section 46 extends farther in at least one direction D perpendicular to the axis X. In the specific case illustrated, the difference in section is due to the fact that the neck 40 is flattened in the direction D, whereas the joining portion 45 is flattened in the direction perpendicular to D. The joining portion 45 is defined by a side surface 47 inclined in a wedge facing towards the head 30 when the spoke 5 is seen from the front, and inclined in a wedge facing towards the joining portion 45 when the spoke 5 is seen from a side.

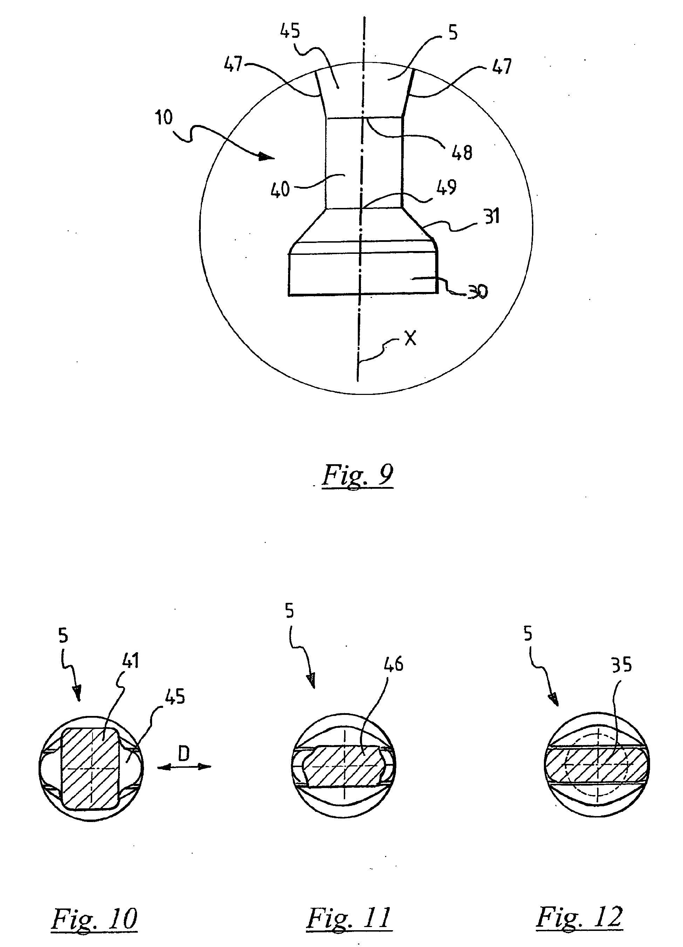

In the embodiment described above the neck 40 has a cross section equal to the cross section 41 at each point and it is possible to identify a theoretical line of discontinuity 48 (figure 9) at the interface section between the neck 40 and the joining portion 45, such a discontinuity being precisely due to the change in cross section.

Each spoke 5 also comprises a theoretical demarcation line 49 between the neck 40 and the head 30.

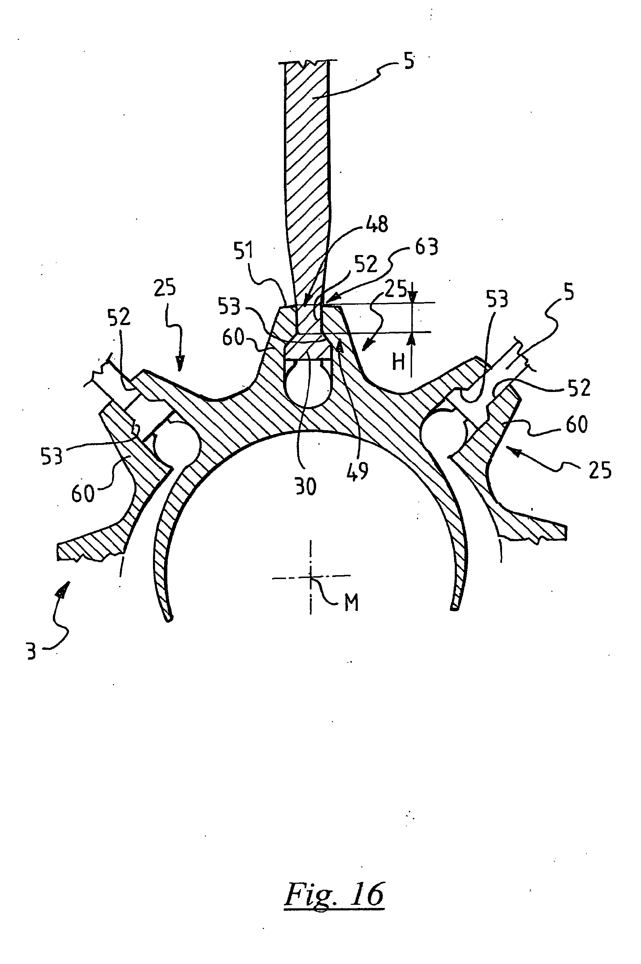

In figure 16 it can be seen how the distance between the theoretical lines 48 and 49 of the spoke 5 corresponds to the radial extension H of the seat 25 between an outer surface 51 of the hub 3 and the inner surface 53. However, it is not excluded the possibility that the two theoretical lines 48 and 49 coincide, in which case the spoke has no neck and the radial extension H of the seats is null.

With reference now again to figure 6 and to figures 13-16, the coupling seats 25 of the hub 3 communicate with the outside through a slit 52 and a through hole 62, both extending in the hub 3 in the direction of its axis M starting from an outer front surface 64 of the spoke attachment portions 60.

The hole 62 is formed in a radially inner position with respect to the slit 52 and communicates, through said slit 52, with an opening 63 formed on the radially outer surface 51 of the spoke attachment portion 60 and adapted to allow the passage of the spoke 5 from the hub 3 to the rim 2 in the configuration with the wheel assembled. The seats 25 are thus open towards the outside in the radial direction of the hub and in the direction of the axis M towards the front end surface of the hub 3.

In the assembly step of the wheel 1, the seats 25 receive the spokes 5 through said holes 62 and slits 52, as shall be better explained later. In particular, the hole 62 is of sufficient size for the passage of the head 30, whereas the slit 52 is of sufficient size for the passage of the neck 40 but not of the head 30.

Each seat 25 comprises a larger cavity 65 at least partially defined by the inner surface 53 matching the head 30 of the spoke 5 and of sufficient size to receive such a head 30, and a smaller cavity 68 having a smaller section than the cavity 65 and of sufficient size to receive the neck 40 of the spoke 5. The larger cavity 65 is thus placed between the hole 62 and the smaller cavity 68 along the radial direction of the hub 3.

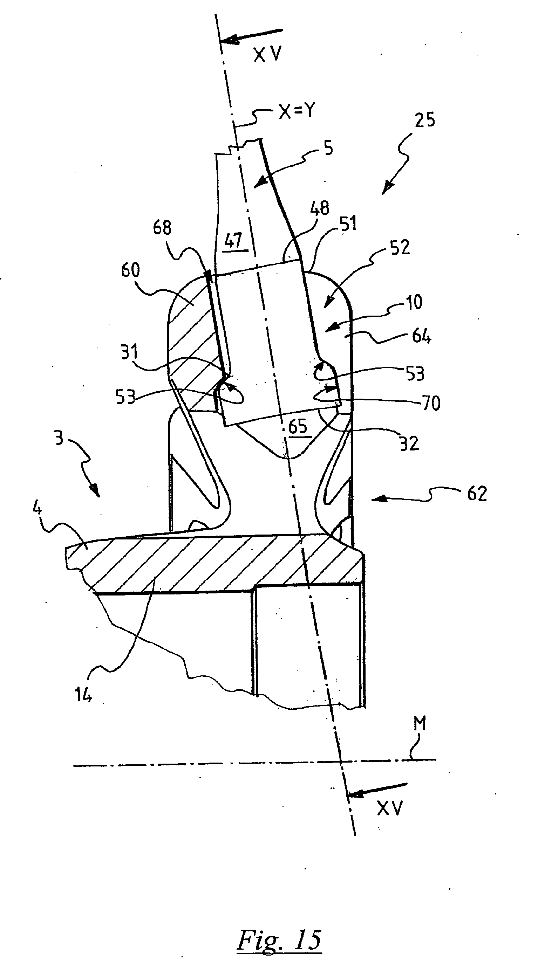

Both of the cavities 65 and 68 are axially (with reference to the rotation axis M of the hub) behind the slit 52, so that when a spoke 5 is inserted into the seat 25 and is subjected to traction, a portion of side surface 70 (fig. 13 and 15) of the larger cavity 65 prevents the spoke 5 from slipping out from the seat 25 in the direction of the axis M of the hub, whereas the stop surface 53 defined at the interface between the larger cavity 65 and the smaller cavity 68 holds the head 30 of the spoke in the direction of traction. No surface of the larger cavity 65, on the other hand, keeps the head 30 from slipping in the opposite direction to the direction of traction, i.e. away from the stop surface 53 of the seat 25.

The circumferential size of the seat 25 in the area intended to house the neck 40 is slightly greater than that of the neck 40 to make it easier to position the end portion 10 of the spoke 5 in the seat 25, as shall be made clearer hereafter.

Preferably, the smaller cavity 68 is an extension of the slit 52 for which reason the neck 40, which has a rectangular section, is unable to rotate about its own axis X.

The cavities 65 and 68 of each seat 25 extend according to a radial axis Y that in a mounted configuration (figure 15) coincides with the axis X of the corresponding spoke 5, and is inclined by an angle α (figure 13) with respect to the axis M of the hub 3, equal to the camber angle of the wheel 1.

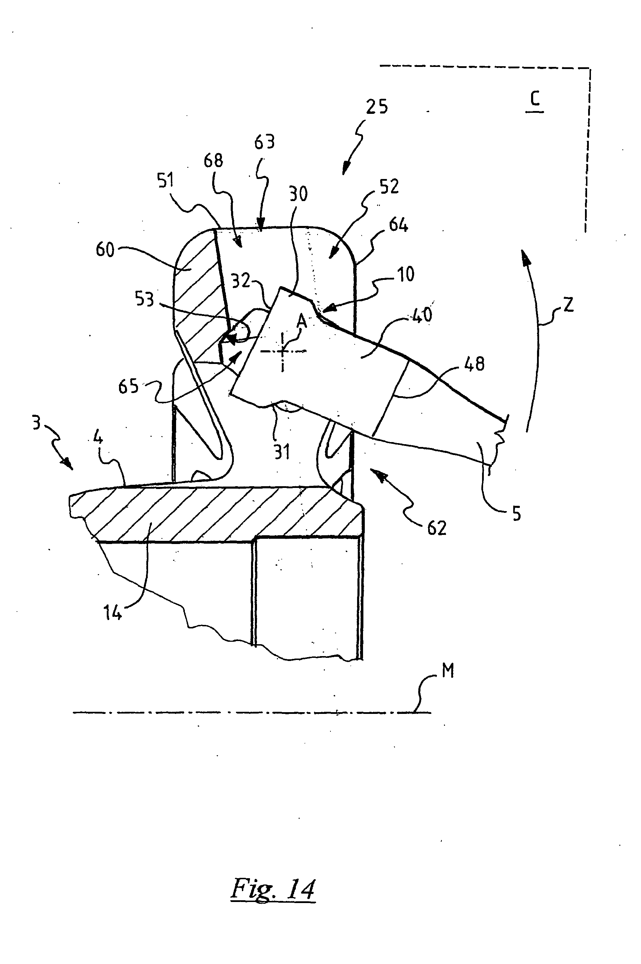

During the assembly step of the wheel 1, illustrated in figures 4, 12, 13 and 14, the head 30 of the spoke 5 is inserted into the hole 62 (figure 4, 13 and 14). The head 30 is thus inserted into the larger cavity 65 until it abuts on the inner surface 53. At this point, the spoke 5 is made to rotate according to the arrow Z until the neck 40 is positioned in the smaller cavity 68 passing through the slit 52. Such a rotation takes place in a plane C perpendicular to the median plane P of the wheel 1, and coinciding with the plane of the page in figure 4 and 14. The rotation stops when the spoke 5 assumes a position in which its end portion 15 for coupling with the rim 2 is at the rim 2. At this point the spoke 5 is in a configuration in which the surface 31 of the head 30 is in abutment on the inner surface 53 of the seat 25. The spoke is thus locked on the rim 2 through the nipple 20; in particular, the nipple 20 is screwed onto the free end of the end portion 15 of the spoke until a predetermined tension value is reached on the spoke 5.

Advantageously, the fact that the circumferential size of the seat 25 in the area intended to house the neck 40 is slightly greater than that of the neck 40 allows the insertion of the end portion 10 of the spoke 5 in the seat 25 to be easy even when the end portion 10 is inclined with respect to the median plane of the bicycle by a smaller angle, thus reducing the angle to be travelled during the rotation to complete the positioning of the end portion 10 in the seat 25. In this case, indeed, the neck 40 can easily partially penetrate into the slit 52.

The inner surface of the seat 25 at the smaller cavity 68 and of the stop surface 53 in the interface area between larger cavity 65 and smaller cavity 68 has a shape matching that of the side surface of the neck 40 and of the abutment surface 31 of the spoke 5. In particular, the inner side surface of the seat 25 defines, in at least one first cross section of the seat 25 of the smaller cavity 68, an area having, along at least one predetermined transversal direction, an extension greater than that of an area defined by the same side surface in a second cross section closer to the hole 62 and, along a direction perpendicular to the aforementioned predetermined transversal direction, an extension shorter than that of the aforementioned at least one second cross section.

Due to the relative size of the spoke 5 and of the seat 25 the aforementioned rotation is the only assembly movement that the spoke 5 is allowed to make, and it occurs about a centre of rotation A (figure 14) situated in the head 30. Thanks to the coinciding sizes of the neck 40 and of the smaller cavity 68 along the axes X and Y, when the abutment surface 31 of the head 30 goes into contact with the inner surface 53 of the larger cavity 65 the theoretical line of discontinuity 48 is positioned at the outer surface 51 and the joining portion 45 of the spoke is arranged outside of the seat 25 of the hub. In this situation, the side surface 47 of the joining portion 45 abuts on the outer surface 51 of the spoke attachment portion 60 by way of the different extension of the respective cross sections, preventing the spoke 5 from sliding in the direction of the axis Y towards the axis M of the hub 3. The outer surface 51 of the spoke attachment portion 60 therefore acts as a stop surface of the spoke 5 in the opposite direction to the direction of traction and prevents the abutment surface 31 of the spoke 5, in conditions of detensioning of the spoke, from being able to move away from the inner surface 53 of the seat 25 in the case of detensioning of the spoke.

What has been described above is just an example embodiment of the invention, many different embodiments being indeed possible. Hereafter, only some of these different embodiments are described, in which elements corresponding to those described above have been indicated with the same reference numerals.

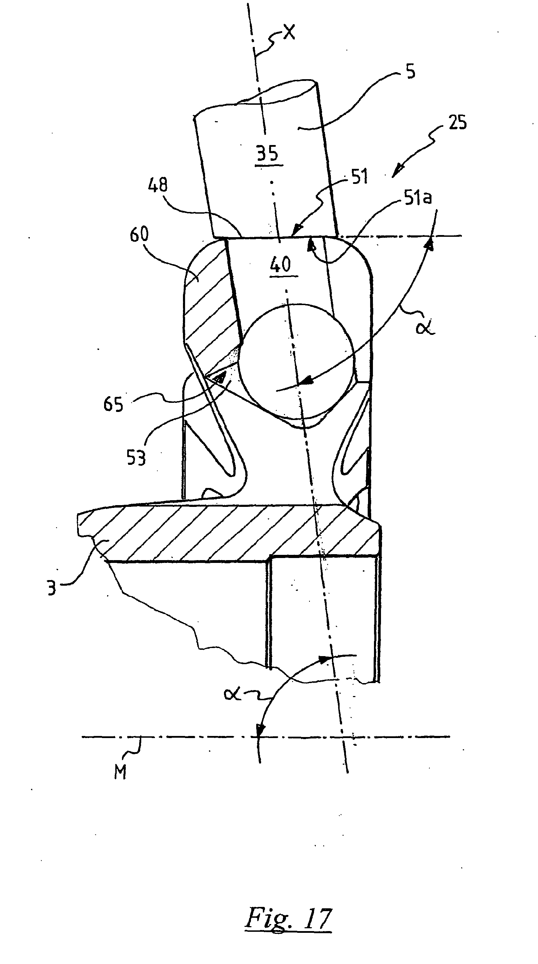

In figure 17 a spoke 5 and a hub 3 are represented that differ from those described and illustrated up to now for the sole reason that the head 30 of the spoke is spherical, as well as the matching surface 53 which defines the larger cavity 65 of the seat 25. The theoretical line of discontinuity 48 is defined at a step between the neck 40 and the intermediate portion 35 of the spoke. Such a step 48, in the tensioning condition of the spoke, abuts on the outer surface 51 of the spoke attachment portion 60, whereas the spherical head abuts on the matching spherical surface 53 of the seat 25.

The seat 25 is inclined by an angle α with respect to the rotation axis M of the hub and therefore also the surface 51a that defines the step 48 is inclined by the same angle with respect to the axis X of the spoke. The outer surface 51 of the hub, on the other hand, is parallel to the rotation axis M of the hub.

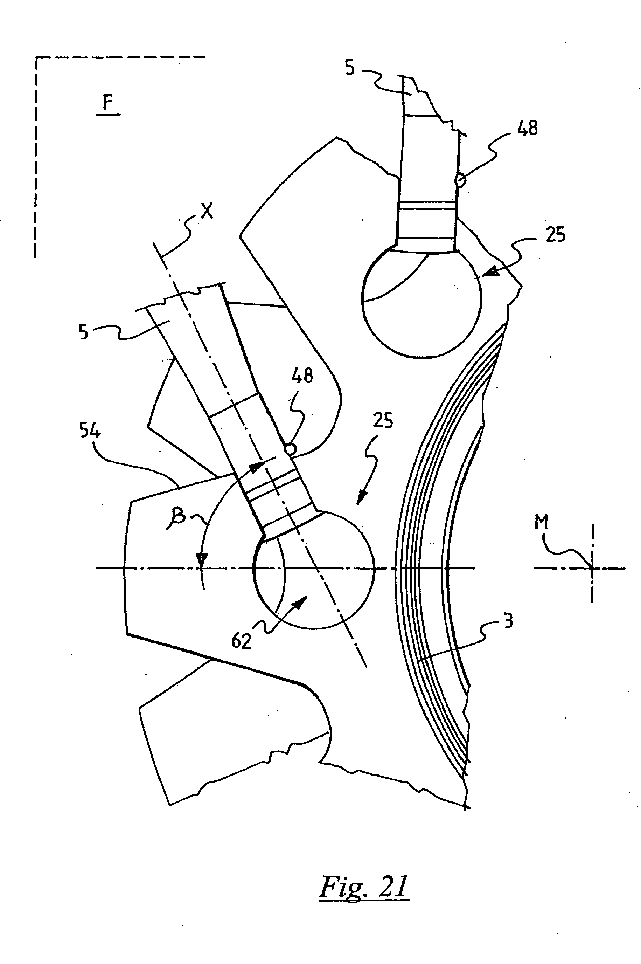

In figure 21, on the other hand, a different embodiment of the invention is illustrated in which the spoke differs from the one described and illustrated with reference to figures 1-16 for the sole reason that, instead of the joining portion 45, an element 48 is provided projecting sideways from the side surface of the elongated body 6 of the spoke, which in this case is a cylindrical surface. The element 48 acts in abutment against an outer side surface 54 of the spoke attachment portion 60 and constitutes a locking element of the spoke with respect to the hub against the displacement of the spoke in the opposite direction to the direction of traction in the case of detensioning of the spoke.

The different embodiment of figure 21 also differs from the one described and illustrated with reference to figures 1-16 in that the axis Y of the seats 25 of the hub 3 are not radial with respect to the axis M of the hub, but oblique, for which reason in the configuration with the wheel assembled the spokes extend in planes that do not contain the rotation axis M of the hub. In particular, the axes Y of the seats 25 have an inclination β in a front plane F of the wheel with respect to a radial plane passing through the centre of the hole 62.

The assembly of the spoke of figure 21 in the respective hub occurs in a totally identical way to what has been described with reference to figures 13-15.

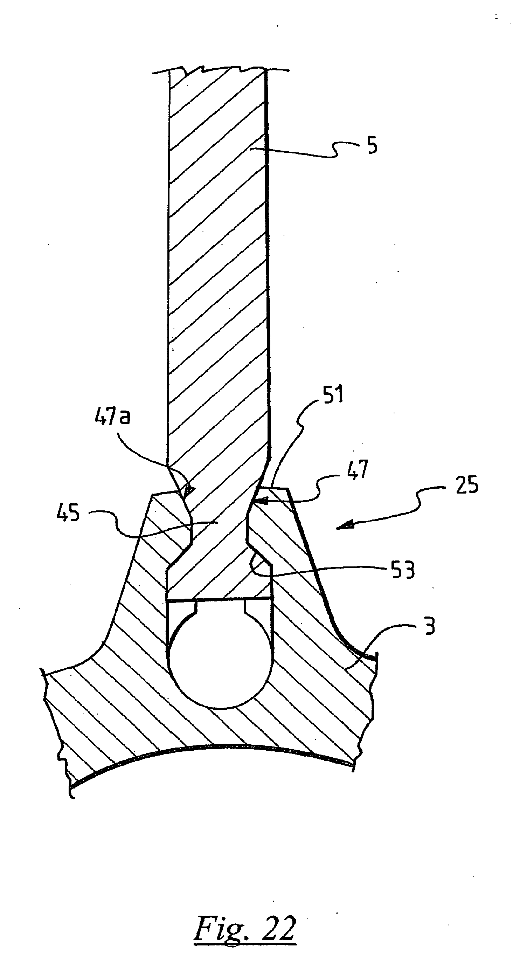

Figure 22 illustrates a further embodiment of the present invention. Such an embodiment differs from the one of figures 1-16 for the sole reason that the side surface 47 of the spoke 5, instead of abutting on the outer surface 51 of the hub 3, abuts on a side surface 47a defined inside the seat 25. The side surface 47a has a shape matching that of the side surface 47 of the joining portion 45 of the spoke 5 and thus defines, at a cross section thereof, an area having, along at least one predetermined transversal direction, an extension greater than that of an area defined by the same surface in a second radially inner adjacent cross section. The coupling between the side surface 47 of the joining portion 45 of the spoke 5 and the inner surface 47a of the seat 25 is such that the spoke 5 cannot move in the seat 25 in a direction opposite the direction of traction in the case of detensioning of the spoke. It should be noted how in this embodiment, the surface 47a of the seat 25 is in a radially outer position with respect to the stop surface 53 along an ideal traction line of the spoke.

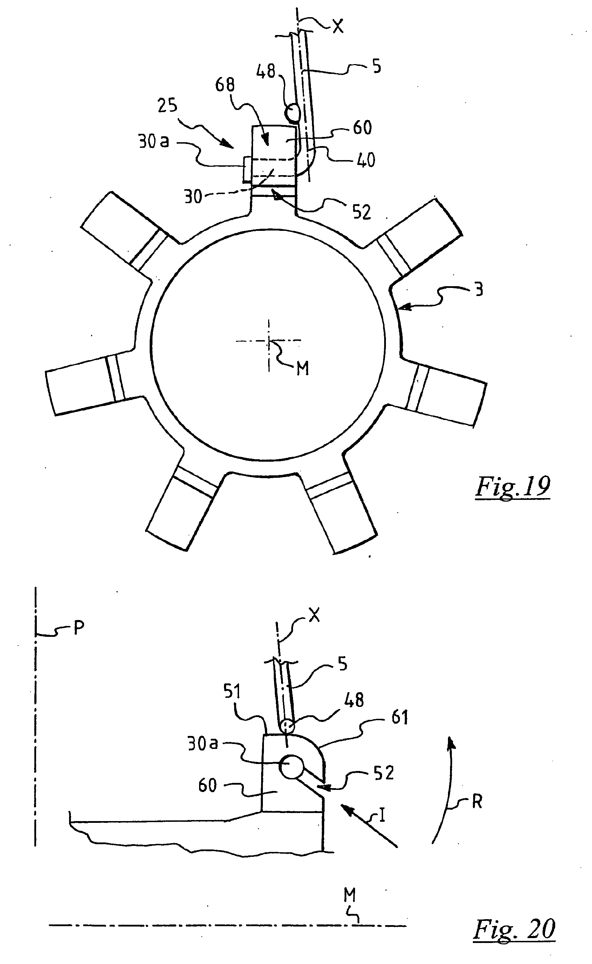

Figures 19 and 20 show an example embodiment of the present invention applied to a curved-headed spoke 5, i.e. to a spoke in which the end portion for attachment to the hub is inclined by a predetermined angle with respect to the longitudinal axis X. In this case, the seat 25 consists of a single cavity 68 communicating with the outside through the slit 52. The head 30 comprises a folding of the neck 40 and has, at one end thereof, a widening 30a that stops against an outer surface 53 of the spoke attachment portion 60 to prevent slipping sideways. The slipping from the slit 52 along the direction I is prevented by a projecting element 48 formed on the side outer surface of the spoke 5 so as to abut against a radially outer surface 51 of the spoke attachment portion 60 of the hub. The outer surface of the spoke attachment portion 60 also has a rounded portion 61 (that can also be replaced for example with a bevelled portion) that allows the element 48 to abut on the outer surface 51 of the spoke attachment portion 60 at the end of the rotation R with respect to the median plane P of the wheel.

In the assembly step, the head 30 is inserted into the slit 52 in a direction I until it is positioned in the seat 25, then the spoke 5 is rotated according to the arrow R with respect to the median plane P of the wheel until it can be locked onto the rim. The rotation of the spoke occurs in a plane substantially perpendicular to the median plane P of the wheel.

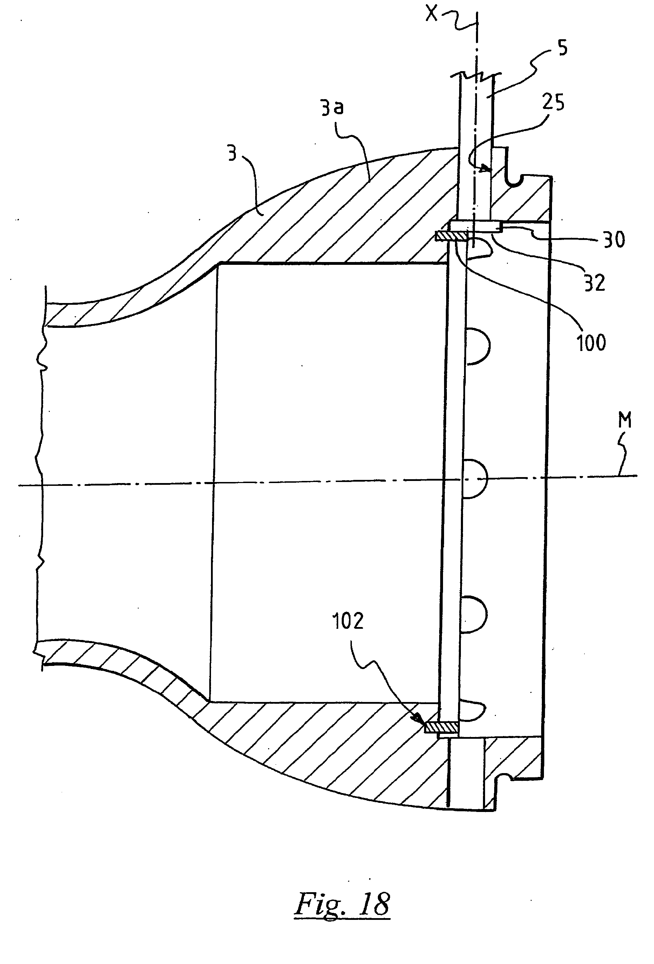

Figure 18 illustrates a further embodiment in which the spoke 5 is rectilinear and has a cylindrical head and is inserted into a seat 25 consisting of a cylindrical hole in a cupped end 3a of the hub 3. The spoke and the seat are orientated in the radial direction with respect to the axis M of the hub, and a Seeger ring 100 is arranged in a throat 102 of the hub 3 and acts in abutment on the end surface 32 of the head 30 to prevent the spoke 5 from slipping from the seat 25 in the radial direction.

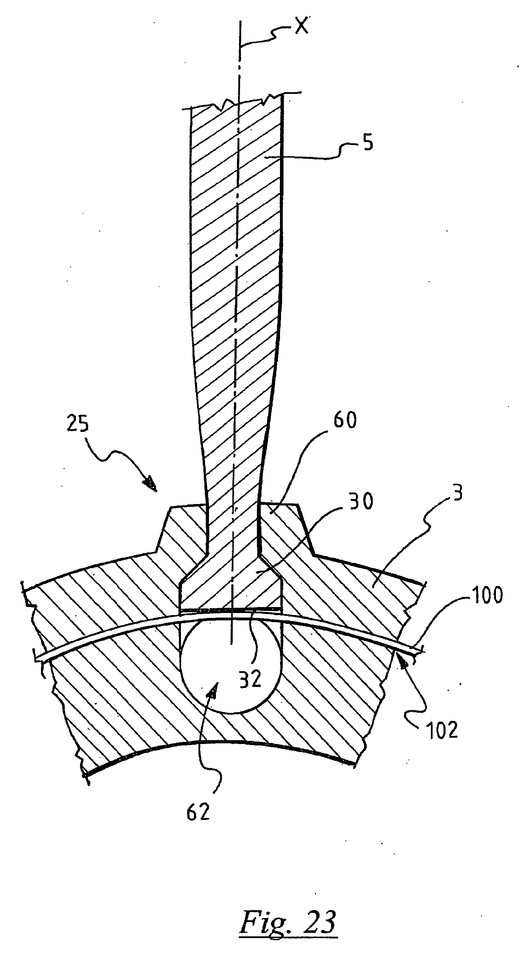

Figure 23 illustrates a further embodiment that differs from the one of figure 18 substantially for the shape of the hub 3 and for the shape of the spoke 5. In particular, the hub has seats 25 which are the same as those of the embodiments of figures 1 to 16, i.e. formed in spoke attachment portions 60 projecting radially from an annular central portion of the hub and having a hole 62 and a slit (not visible in the figure).

The embodiments of figures 18 and 23 share the characteristic that the locking means against the slipping of the spokes along the axis X in the opposite direction to the direction of tensioning are associated with the hubs alternately (and possibly in addition) to those defined on the spokes.

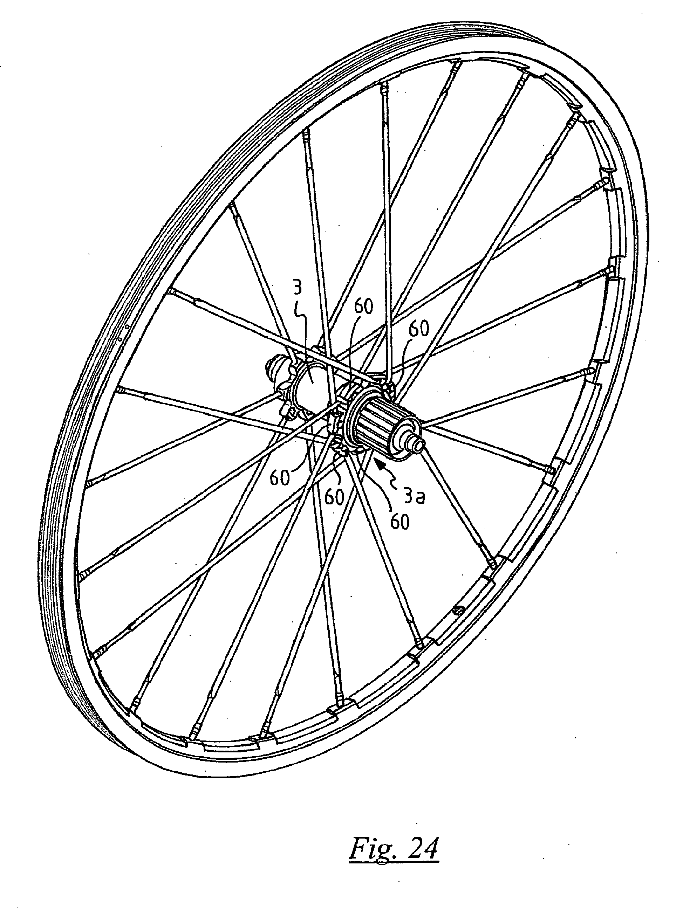

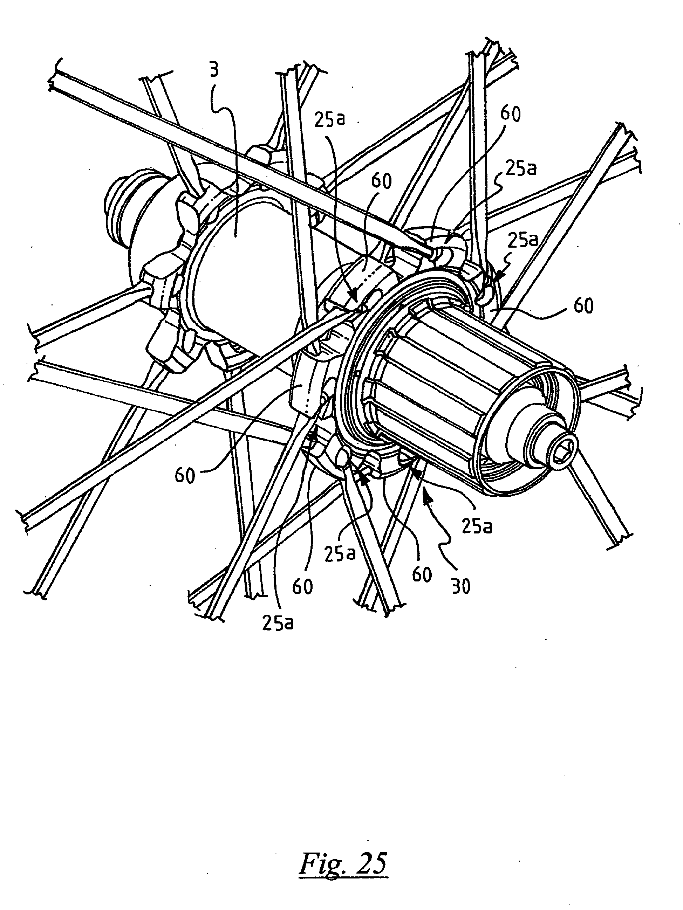

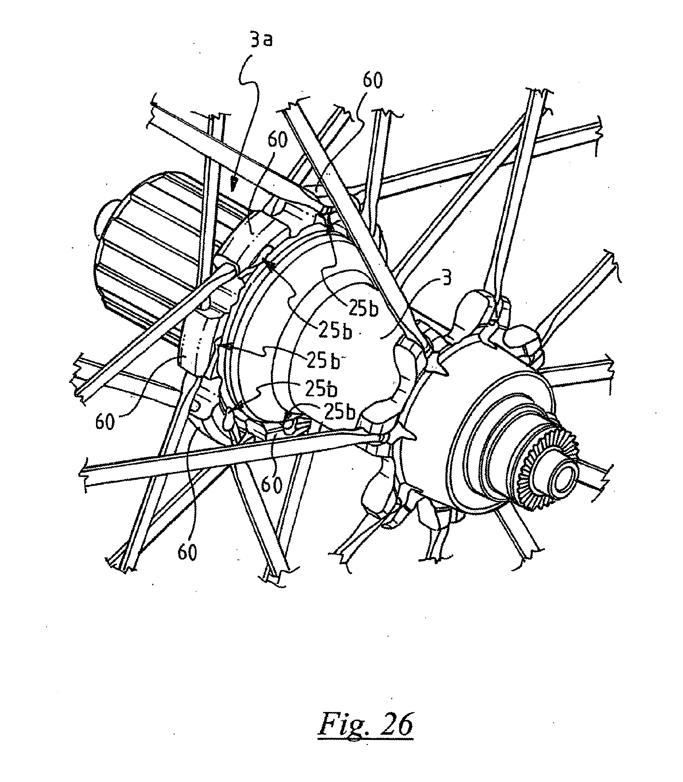

Figures 24-26 show a further embodiment of the wheel 1 of the present invention. In particular, it concerns a rear bicycle wheel with V-brakes. The hub 3 of this embodiment differs from the one of figure 5 for the sole reason that, at a free end portion 3a thereof in which the sprocket assembly is mounted, it has spoke attachment portions 60 each comprising two seats 25a, 25b (see in particular figures 25 and 26, which show the hub 3 from two opposite view points) formed on the opposite sides of such a spoke attachment portion 60. The seats 25a, 25b are orientated in a non-radial direction, like those of figure 21. In particular, the two seats 25a, 25b of each spoke attachment portion 60 are orientated at the opposite side with respect to a plane of radial symmetry of the spoke attachment portion 60. At the free end portion of the hub 3 opposite the one in which the sprocket assembly is mounted, the hub 3 is configured in a totally similar way to what has been illustrated and described with reference to figure 5. It should be noted how the number of seats provided at the side of the hub on which the sprocket assembly is mounted is twice than that provided on the opposite side of the hub.

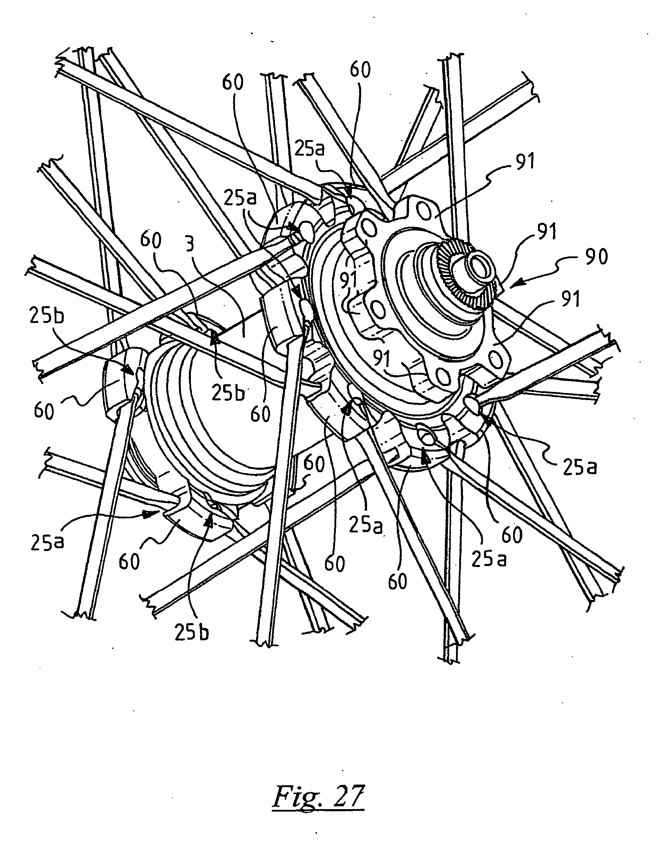

Figure 27 shows the spokes-hub coupling area of a further embodiment of the wheel 1 of the present invention. In particular, it concerns a front bicycle wheel with a disc brake. The hub 3 of this embodiment differs from the one of figures 24-26 for the sole reason that, at both of the free end portions thereof, it has spoke attachment portions 60 each comprising two seats 25a, 25b formed on the opposite sides of such a spoke attachment portion 60. The disc brake is mounted on the attachment member 90 provided with six portions 91 projecting radially. It should be noted how the number of spoke attachment portions 60 (and therefore of seats 25) provided at the side of the hub on which the disc brake is mounted is twice than that provided at the opposite side of the hub.

In the embodiments of figure 24-27, the assembly of the spokes 5 on the hub 3 takes place in a totally similar way to what has been described with reference to figures 1-16. In particular, the spokes 5 are first mounted on the end portion 3a of the hub provided with two seats 25a, 25b for each spoke attachment portion 60. Such an end portion is the one in which the sprocket assembly or the disc brake is mounted. Thereafter, the spokes 5 are mounted on the opposite end portion of the hub 3. The spokes 5 are fixed to the rim 2 after all of them are fixed on the hub 3; this is made possible by the fact that the spokes cannot slip away from the hub 3.

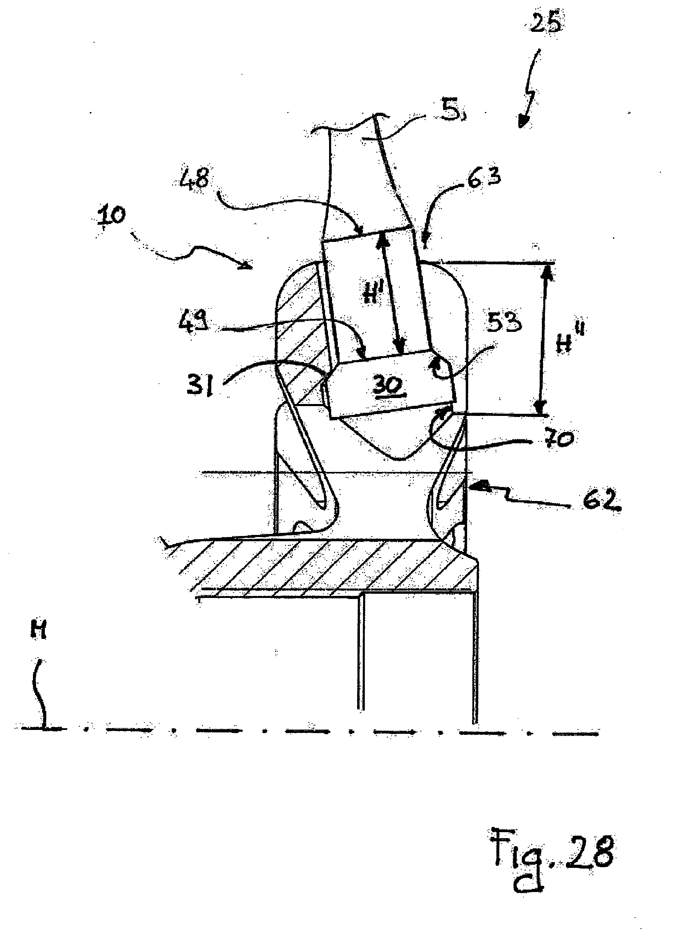

Figure 28 shows an alternative embodiment of the invention where the theoretical line of discontinuity 48 of the spoke 5 does not prevent a displacement of the abutment surface 31 away from said first stop surface 53 in a detensioning condition of the spoke. Differently it just limits such a displacement. In particular the distance H' between the theoretical lines of discontinuity 48 and 49 is less of the distance H" between the radial opening 63 and the hole 62, therefore the displacement of the spoke 5 is limited in a way that does not allow the end portion 10 to come out from the hole 62. This is due to the fact that even if the spoke is not tensioned the head 30 is still prevented from moving in a direction parallel to the rotation axis of the hub by the side surface 70 of the seat 25.

Of course, the man skilled in the art will understand that it is possible to combine the various solutions illustrated and described above, as far as the different ways of embodying the locking means against the displacement of the spoke towards the hub and the configuration of the hub is concerned.

## Claims

1. Bicycle wheel (1), comprising a hub (3) rotating about a rotation axis (M), a rim (2) and a plurality of spokes (5) extending between the hub (3) and the rim (2), at least one of said spokes (5) comprising an elongated body (6) extending along a longitudinal axis (X) and having a first end portion (10) coupled with the hub (3) and a second end portion (15) coupled with the rim (2), wherein said first end portion (10) comprises an abutment surface (31) in contact with a first stop surface (53) of the hub (3) in a tensioning condition of the spoke and a surface (32) substantially opposite said abutment surface (31) and not making contact with the hub, the wheel being **characterised in that** it comprises locking means (48, 100) of the spoke with respect to the hub adapted to limit a displacement of said abutment surface (31) away from said first stop surface (53) in a detensioning condition of the spoke.

2. Wheel (1) according to claim 1, wherein said locking means (48, 100) prevent a displacement of said abutment surface (31) away from said first stop surface (53) in a detensioning condition of the spoke.

3. Wheel (1) according to claim 1, wherein said abutment surface (31) is active, in a tensioning condition of the spoke, on said first stop surface (53) to prevent the displacement of the spoke (5) towards the rim (2).

4. Wheel (1) according to any one of the previous claims, wherein at least some of said spokes (5) extend from the hub (3) towards the rim (2) in respective planes that contain said rotation axis (M).

5. Wheel (1) according to any one of the previous claims, wherein at least some of said spokes (5) extend from the hub (3) towards the rim (2) in respective planes that do not contain said rotation axis (M).

6. Wheel (1) according to any one of the previous claims, wherein said locking means (48) are defined on said elongated body (6) and cooperate with a second stop surface (51, 47a, 54) of the hub (3).

7. Wheel (1) according to claim 6, wherein said first end portion (10) is housed in a respective seat (25) formed in the hub (3) and said locking means (48) are defined in a locking portion (45) of said elongated body (6) adjacent to said first end portion (10).

8. Wheel (1) according to claim 7, wherein said locking portion (45) is arranged outside of said seat (25) and said second stop surface is an outer surface (51, 54) of the hub (3).

9. Wheel (1) according to claim 7, wherein said locking portion (47) is at least partially housed in said seat (25) and said second stop surface is an inner surface (47a) of said seat (25).

10. Wheel (1) according to any one of claims 7 to 9, wherein said locking means (48) are defined by at least one cross section of said locking portion (45) having, along at least one predetermined transversal direction, an extension greater than that of at least one cross section of said first end portion (10).

11. Wheel (1) according to claim 10, wherein said at least one cross section of said locking portion (45) has an extension, along a direction perpendicular to said predetermined transversal direction, shorter than that of said at least one cross section of said first end portion (10).

12. Wheel (1) according to claim 8, wherein said locking means (48) are defined by an element projecting sideways from said elongated body (6).

13. Wheel (1) according to any one of claims 7 to 12, wherein said seat (25) and said spoke (5) are shaped so that by rotating the spoke (5) with respect to the seat (25), in the assembly step of the wheel, about a rotation axis passing through a free end of said first end portion (10) of the spoke (5), the locking means (48) abut on said second stop surface (51, 47a, 54).

14. Wheel (1) according to claim 13, wherein said first end portion (10) extends along said longitudinal axis (X) and said rotation occurs in a plane substantially perpendicular to a median plane (P) of the wheel.

15. Wheel (1) according to claim 13, wherein said first end portion (10) extends along a direction inclined with respect to said longitudinal axis (X) and said rotation occurs in a plane substantially perpendicular to a median plane (P) of the wheel.

16. Wheel (1) according to any one of claims 6 to 15, wherein the hub (3) comprises an annular central portion (14) and a plurality of spoke attachment portions (60) projecting radially from said central portion (14), wherein each seat (25) is formed on a spoke attachment portion (60) of the hub (3).

17. Wheel (1) according to claim 16, wherein each seat (25) is formed on a respective spoke attachment portion (60).

18. Wheel (1) according to claim 16, wherein at least one spoke attachment portion (60) comprises at least two seats (25a, 25b).

19. Wheel (1) according to claim 18, wherein said at least two seats (25a, 25b) are formed on opposite sides of said spoke attachment portion (60).

20. Wheel (1) according to any one of claims 16 to 19, wherein each seat (25) comprises a first opening (62) for the insertion of the first end portion (10) of the spoke (5) in the assembly step of the wheel and a second opening (63) for the passage of the spoke (5) from the hub (3) to the rim (2) in the configuration with the wheel assembled, said first and second openings (62, 63) being in communication with each other through a slit (52), said slit (52) having at least one dimension smaller than that of said first opening (62).

21. Wheel (1) according to claim 20, wherein said first opening (62) and said slit (52) are formed on a front end surface (64) of said spoke attachment portion (60) and wherein said slit (52) communicates with a housing cavity (65, 68) of the first end portion (10) of spoke formed in said spoke attachment portion (60) between said first opening (62) and said second opening (63), said housing cavity (65, 68) having a first inner side surface portion (70) active in abutment on said first end portion (10) of spoke to prevent the displacement of the spoke (5) along a direction parallel to the rotation axis (M) of the hub (3) and a second inner side surface portion (53) active in abutment on said first end portion (10) of the spoke to prevent the displacement of the spoke (5) towards the rim (2).

22. Wheel (1) according to claim 21, wherein said cavity (65, 68) comprises a first cavity portion (65) adjacent to said first opening (62) and a second cavity portion (68) having a size smaller than that of said first cavity portion (65) and defined on the opposite side to said first opening (62) with respect to said first cavity portion (65), wherein said first inner side surface portion (70) is defined in said first cavity portion (65) and said second inner side surface portion (53) is defined at the interface between said first and second cavity portions (65, 68).

23. Wheel (1) according to claim 21 or 22, wherein said cavity (65, 68) extends radially in said spoke attachment portion (60) along a direction inclined by a predetermined angle (α) with respect to the rotation axis (M) of the hub (3).

24. Wheel (1) according to any one of claims 1 to 5,
wherein said locking means (100) are associated with the body (4) of the hub (3) and cooperate with a free end surface (32) of said first end portion (10) of the spoke (5).

25. Wheel (1) according to claim 24, wherein said locking means comprise a Seeger ring (100) housed in a throat (102) formed on a front end surface of the hub (3) and projecting from said throat (102) so as to define an abutment surface for said free end surface (32) of said first end portion (10) of the spoke (5).

26. Wheel (1) according to claim 1, wherein said first end portion (10) is housed in a respective seat (25) formed in the hub (3) and the locking means (48) limit the displacement so that the end portion (10) does not come out of the seat (25).

27. Spoke (5) for a bicycle wheel, comprising an elongated body (6) extending along a longitudinal axis (X) and having a first end portion (10) for coupling with a hub (3) of a bicycle and a second end portion (15) for coupling with a rim (2) of a bicycle, wherein said first end portion (10) comprises an abutment surface (31) adapted to act in contact with a stop surface (53) of the hub (3) in a tensioning condition of the spoke with the wheel assembled, the spoke being **characterised in that** it comprises locking means (48) of the spoke with respect to the hub adapted to limit a displacement of said abutment surface (31) away from said stop surface (53) in a detensioning condition of the spoke with the wheel assembled.

28. Spoke (5) according to claim 27, wherein said locking means (48) prevent a displacement of said abutment surface (31) away from said stop surface (53) in a detensioning condition of the spoke with the wheel assembled.

29. Spoke (5) according to claim 27, wherein said abutment surface (31) is adapted to act, in a tensioning condition of the spoke with the wheel assembled, against said stop surface (53) of the hub to prevent the displacement of the spoke (5) towards the rim (2) of the wheel (1).

30. Spoke (5) according to claim 29, wherein said locking means (48) are defined on a side surface (47) of a locking portion (45) of said elongated body (6) adjacent to said first end portion (10).

31. Spoke (5) according to claim 30, wherein said locking means (48) are defined by at least one cross section of said locking portion (45) having, along at least one predetermined transversal direction, an extension greater than that of at least one cross section of said first end portion (10).

32. Spoke (5) according to claim 31, wherein said at least one cross section of said locking portion (45) has an extension, along a direction perpendicular to said predetermined transversal direction, shorter than that of said at least one cross section of said first end portion (10).

33. Spoke (5) according to claim 30, wherein said locking means (48) are defined by an element projecting sideways from said elongated body (6).

34. Spoke (5) according to any one of claims 29 to 33, wherein said first end portion (10) extends along said longitudinal axis (X).

35. Spoke (5) according to any one of claims 29 to 33, wherein said first end portion (10) extends along a direction inclined with respect to said longitudinal axis (X).

36. Hub (3) for a bicycle wheel, comprising a body (4) having at least one seat (25) for housing a respective end portion (10) of spoke comprising a first stop surface (53) adapted to act in contact with an abutment surface (31) of a respective end portion (10) of spoke in a tensioning condition of the spoke with the wheel assembled, wherein, on the opposite side to the first stop surface (31), the hub body (4) is not intended to come into contact with the end portion (10) of spoke, the hub being **characterised in that** it comprises locking means (51, 47a, 54, 100) of the spoke with respect to the hub adapted to limit a displacement of said abutment surface (31) away from said stop surface (53) in a detensioning condition of the spoke with the wheel assembled.

37. Hub (3) according to claim 36, wherein said locking means (51, 47a, 54, 100) prevent a displacement of said abutment surface (31) away from said stop surface (53) in a detensioning condition of the spoke with the wheel assembled.

38. Hub (3) according to claim 36, wherein said first stop surface (53) is adapted to act, in a tensioning condition of the spoke with the wheel assembled, against said abutment surface (31) to prevent the displacement of the spoke (5) in the direction of the rim (2) of the wheel.

39. Hub (3) according to any one of claims from 36 to 38, wherein said locking means (51, 47a, 54) are positioned in said body (6) in a radially outer position with respect to said first stop surface (31).

40. Hub (3) according to claim 39, wherein said locking means are defined on an inner side surface (47a) of said seat (25).

41. Hub (3) according to claim 40, wherein said side surface (47a) defines, in at least one first cross section of said seat (25), an area having, along at least one predetermined transversal direction, an extension greater than that of an area defined by the same surface in a second cross section closer to said stop surface (53).

42. Hub (3) according to claim 41, wherein the area defined by said side surface (47a) in said at least one first cross section of said seat (25) has an extension, along a direction perpendicular to said predetermined transversal direction, shorter than that of said at least one second cross section.

43. Hub (3) according to any one of claims 39 to 42, wherein said body (4) is substantially tubular and comprises an annular central portion (14) and, at at least one of the opposite end portions (3a) thereof, a plurality of spoke attachment portions (60) projecting radially from said central portion (14), wherein said at least one seat (25) is formed on a spoke attachment portion (60).

44. Hub (3) according to claim 43, wherein each seat (25) is formed on a respective spoke attachment portion (60).

45. Hub (3) according to claim 43, wherein at least one spoke attachment portion (60) comprises at least two seats (25a, 25b).

46. Hub (3) according to claim 45, wherein said at least two seats (25a, 25b) are formed on opposite sides of said spoke attachment portion (60).

47. Hub (3) according to any one of claims 43 to 46, wherein each seat (25) comprises a first opening (62) for the insertion of the end portion (10) of the spoke (5) in the assembly step of the wheel and a second opening (63) for the passage of the spoke (5) from the hub (3) to the rim (2) in the configuration with the wheel assembled, said first and second openings (62, 63) being in communication with each other through a slit (52), said slit (52) having at least one dimension smaller than that of said first opening (62).

48. Hub (3) according to claim 47, wherein said first opening (62) and said slit (52) are formed on a front end surface (64) of said spoke attachment portion (60) and wherein said slit (52) communicates with a cavity (65, 68) for housing the first end portion (10) of spoke formed in said spoke attachment portion (60) between said first opening (62) and said second opening (63), said housing cavity (65, 68) having a first inner side surface portion (70) adapted to act in abutment on said end portion (10) of spoke to prevent the displacement of the spoke (5) along a direction parallel to the rotation axis (M) of the hub (3) and a second inner side surface portion (53) adapted to act in abutment on said end portion (10) of the spoke (5) to prevent the displacement of the spoke (5) towards the rim (2).

49. Hub (3) according to claim 48, wherein said cavity (65, 68) comprises a first cavity portion (65) adjacent to said first opening (62) and a second cavity portion (68) having a dimension smaller than that of said first cavity portion (65) and defined on the opposite side to said first opening (62) with respect to said first cavity portion (65), wherein said first inner side surface portion (70) is defined in said first cavity portion (65) and said second inner side surface portion (53) is defined at the interface between said first and second cavity portions (65, 68).

50. Hub (3) according to claim 48 or 49, wherein said cavity (65, 68) extends radially in said spoke attachment portion (60) along a direction inclined by a predetermined angle (α) with respect to the rotation axis (M) of the hub (3).

51. Hub (3) according to any one of claims 37 to 39, wherein said locking means (100) are associated with said hub body (4).

52. Hub (3) according to claim 51, wherein said locking means comprise a Seeger ring (100) housed in a throat (102) formed on a front end surface of the hub body (4) and projecting from said throat (102) so as to define an abutment surface for a free end surface (32) of the end portion (10) of the spoke (5).

53. Method for assembling a bicycle wheel (1), comprises the steps of:
- providing a plurality of spokes (5);
- associating a first free end portion (10) of each spoke (5) with a hub (3);
- associating a second free end portion (15) of each spoke (5) with a rim (2);
- tensioning the spoke (5) to a predetermined tension value;
**characterised in that** the step of associating a first free end portion (10) of each spoke (5) with a hub (3) comprises the step of:
- inserting said first free end portion (10) into a seat (25) formed in the hub (3) until it is brought into abutment against an inner surface (53) of said seat (25);
- rotating the spoke (5) about a rotation axis passing through said first free end portion (10) in a plane intercepting the rim (2) until the first end portion of spoke (10) abuts against a stop surface (53) of the hub (3).

54. Method according to claim 53, wherein said rotation occurs in a plane substantially perpendicular to a median plane of the wheel (1).

55. Method according to claim 53 or 54, wherein said step of associating a first free end portion (10) of the spoke (5) with the hub (3) comprises the steps of:
- associating at least one spoke (5) with the hub (3) at a first side of a spoke attachment portion (60) formed in the hub (3) at a first free end portion (3a) thereof;
- associating at least one spoke (5) with the hub (3) at a second side of said spoke attachment portion (60) opposite said first side;
- associating at least one spoke (5) with the hub (3) at a second free end portion of the hub (3) opposite said first free end portion (3a).
